# EUROPEAN PATENT SPECIFICATION

(11) **EP 3 346 784 B1**
(45) Date of publication and mention of the grant of the patent: **28.08.2019**
(21) Application number: 15905040.0
(22) Date of filing: 29.09.2015
(51) Int. Cl.: H04W 72/04, H04W 76/20

(54) **CARRIER SELECTION METHOD AND DEVICE IN CARRIER AGGREGATION TECHNOLOGY**
TRÄGERAUSWAHLVERFAHREN UND VORRICHTUNG IN EINER TRÄGERAGGREGATIONSTECHNIK
PROCÉDÉ ET APPAREIL DE SÉLECTION DE PORTEUSE DANS UNE TECHNIQUE D'AGRÉGATION DE PORTEUSES

(43) Date of publication of application: 11.07.2018
(73) Proprietor: Huawei Technologies Co., Ltd., Longgang District Shenzhen, Guangdong 518129 (CN)
(72) Inventor: FANG, Minxi, Shenzhen Guangdong 518129 (CN); ZHANG, Yanqiang, Shenzhen Guangdong 518129 (CN)
(74) Representative: Epping - Hermann - Fischer
(86) International application number: PCT/CN2015/091060
(87) International publication number: WO 2017/054128

(56) References cited:
- WO-A1-2013/079092
- WO-A2-2013/189340
- CN-A- 101 848 506
- CN-A- 102 469 541
- CN-A- 104 219 723
- US-A1- 2012 106 511
- US-A1- 2015 163 041

## Description

### TECHNICAL FIELD

The present invention relates to the field of wireless communications technologies, and in particular, to a carrier selection method and base station in a carrier aggregation technology.

### BACKGROUND

In a Long Term Evolution (Long Term Evolution, LTE) system, a maximum bandwidth is 20 MHz. For a Long Term Evolution Advanced (LTE-Advanced, LTE-A) system, a peak rate in the LTE-A system is greatly improved in comparison with that in the LTE system. In the LTE-A system, the peak rate needs to reach 1 Gbps in a downlink and 500 Mbps in an uplink. Apparently, a 20 MHz bandwidth cannot meet this requirement. In order that the LTE-A system can meet the requirement, the 3GPP release 10 defines a carrier aggregation (Carrier Aggregation, CA) technology. That is, multiple carriers on a same frequency band or different frequency bands are aggregated to obtain a higher bandwidth, and serve user equipment (user equipment, UE) if necessary, to provide a required rate. A resource utilization rate can be maximized, and discrete spectrum resources can be effectively utilized in CA.

An aggregated carrier includes a primary component carrier (Primary Component Carrier, PCC) and one or more secondary component carriers (Secondary Component Carrier, SCC). Service data and control information can be sent on both the primary component carrier and the secondary component carrier. A cell corresponding to the primary component carrier is a primary serving cell (primary serving cell, PCell), and a cell corresponding to the secondary component carrier is a secondary serving cell (Secondary serving Cell, SCell).

According to 3GPP 36.300, for CA UE, only a primary serving cell of the CA UE has a physical uplink control channel (Physical Uplink Control Channel, PUCCH). The PUCCH channel of the primary serving cell of the CA UE needs to carry information about all primary serving cells and all secondary serving cells of the CA UE, for example, an uplink acknowledgement (Acknowledgement, ACK)/a negative acknowledgement (Negative Acknowledgement, NACK), channel state information (Channel State Information, CSI), and a scheduling request (Scheduling Request, SR). It can be learned that the primary serving cell of the CA UE has relatively heavy load. If the primary serving cell of the CA UE has excessively heavy load, congestion may occur, and performance of the CA UE is severely affected in indicators such as an access success rate, a re-establishment success rate, a call drop rate, a handover success rate, and a user rate.

WO 2013/189340 A2 discloses a method for implementing soft handover based on a carrier aggregation technology, a base station and a terminal. The method is applied in a scenario of complementary carrier coverage, and includes: a terminal and a base station simultaneously receiving and transmitting data through a plurality of cells corresponding to a plurality of member carriers by means of carrier aggregation, wherein one of the plurality of cells is a primary cell, and the rest are secondary cells; according to a measurement result of the terminal, the base station determining to switch one of the secondary cells to be the primary cell of the terminal, and marking the one of the secondary cells as a target secondary cell; and the base station maintaining a service connection between the terminal and the target secondary cell, and notifying the terminal to hand over a control signaling connection to the target secondary cell.

US 2012/106511 A1 discloses a method of handling primary serving cell change for a network in a wireless communication system. The method comprises configuring a first cell as a primary serving cell and at least a second cell as a secondary serving cell to a mobile device of the wireless communication system, including the second cell in a list for secondary serving cell configuration release in a message for changing the primary serving cell to the second cell, and transmitting the message to the mobile device to release secondary serving cell configuration of the second cell.

US 2015/163041 A1 describes apparatus and methods for communicating control plane data with a mobile device in a Long Term Evolution (LTE) network employing carrier aggregation. A network apparatus, such as an enhanced NodeB (eNodeB) or a mobility management entity (MME), can be configured to evaluate a measurement report (MR) received from a mobile device for one or more radio frequency (RF) conditions associated with a primary network cell and one or more RF conditions associated with a secondary network cell. Then, based on the evaluation, the network apparatus can determine to communicate the control plane data with the mobile device via the primary network cell, the secondary network cell, or both. The control plane data can correspond to non-access stratum (NAS) information, radio resource control (RRC) information, or a hybrid automatic repeat request (HARQ) retransmission of previously transmitted control plane data.

### SUMMARY

The reader is referred to the appended independent claims. Some preferred features are laid out in the dependent claims.

Aspects of the present invention provide a carrier selection method and base station in a carrier aggregation technology, to improve performance of CA UE.

In the following, parts of the description and drawings referring to embodiments which are not covered by the claims are not presented as embodiments of the invention, but as examples useful for understanding the invention.

According to a first aspect, a carrier selection method in a carrier aggregation technology is provided, including:
obtaining, by a base station, radio channel information reported by CA user equipment UE, where the radio channel information includes radio channel information of a PCC and radio channel information of an SCC; and
when the radio channel information of the SCC is greater than the radio channel information of the PCC, sending, by the base station, an RRC reconfiguration message to the CA UE, where the RRC reconfiguration message is used by the CA UE to use the SCC as a new PCC.

Optionally, the CA UE periodically reports the radio channel information to the base station, and the base station periodically compares the radio channel information of the SCC with the radio channel information of the PCC. The radio channel information of the SCC and the radio channel information of the PCC are reported by the CA UE.

With reference to the first aspect, in a first possible implementation of the first aspect, that the radio channel information of the SCC is greater than the radio channel information of the PCC is specifically:
in a first time period, the radio channel information of the SCC is greater than the radio channel information of the PCC.

With reference to the first aspect, in a second possible implementation of the first aspect, that the radio channel information of the SCC is greater than the radio channel information of the PCC is specifically:
in a second time period, a value obtained after the radio channel information of the PCC is subtracted from the radio channel information of the SCC is greater than a threshold.

With reference to any one of the first aspect to the second possible implementation of the first aspect, in a third possible implementation of the first aspect, the radio channel information is any one or a combination of the following:
a channel quality indicator (Channel quality indicator, CQI), reference signal received power (Reference Signal Received Power, RSRP), or reference signal received quality (reference signal received quality, RSRQ).

The CA UE may directly use the SCC as the new PCC. Optionally, the CA UE measures the SCC. When a measurement result meets a measurement threshold, the CA UE uses the SCC as the new PCC.

Specifically, that the CA UE measures the SCC may be that the CA UE measures RSRP and/or RSRQ of the SCC, and that a measurement result meets a measurement threshold may be that a measured RSRP value and/or a measured RSRQ value of the SCC are/is greater than or equal to the measurement threshold. The measurement threshold is a preset empirical value.

Optionally, when there are multiple SCCs, the CA UE may report radio channel information of the multiple SCCs to the base station. When the base station learns that there are two or more SCCs whose radio channel information is greater than the radio channel information of the PCC, the RRC reconfiguration message sent by the base station to the CA UE may include information about the two or more SCCs.

When the CA UE receives the RRC reconfiguration message that includes the information about the two or more SCCs, the CA UE selects, as a new PCC from all SCCs whose information is included in the RRC reconfiguration message, any SCC whose measurement result meets the measurement threshold; or the CA UE selects, as a new PCC from all SCCs whose information is included in the RRC reconfiguration message, an SCC that has largest radio channel information and whose measurement result meets the measurement threshold.

With reference to any one of the first aspect to the third possible implementation of the first aspect, in a fourth possible implementation of the first aspect, the RRC reconfiguration message is further used by the CA UE to use the PCC as a new SCC.

The RRC reconfiguration message includes information about one or more SCCs whose radio channel information is greater than the radio channel information of the PCC and that are determined by the base station.

The base station obtains the radio channel information reported by the CA UE. The radio channel information includes the radio channel information of the PCC and the radio channel information of the SCC. When the radio channel information of the SCC is greater than the radio channel information of the PCC, the base station sends the RRC reconfiguration message to the CA UE. The RRC reconfiguration message is used by the CA UE to use the SCC as the new PCC. In this way, a better carrier is selected as a PCC, so as to improve performance of the CA UE.

According to a second aspect, a carrier selection base station in a carrier aggregation technology is provided, including:
a transceiver unit, configured to obtain radio channel information reported by CA UE, where the radio channel information includes radio channel information of a PCC and radio channel information of an SCC; and
a processing unit, configured to: when the radio channel information of the SCC is greater than the radio channel information of the PCC, send an RRC reconfiguration message to the CA UE by using the transceiver unit, where the RRC reconfiguration message is used by the CA UE to use the SCC as a new PCC.

With reference to the second aspect, in a first possible implementation of the second aspect, that the radio channel information of the SCC is greater than the radio channel information of the PCC is specifically:
in a first time period, the radio channel information of the SCC is greater than the radio channel information of the PCC.

With reference to the second aspect, in a second possible implementation of the second aspect, that the radio channel information of the SCC is greater than the radio channel information of the PCC is specifically:
in a second time period, a value obtained after the radio channel information of the PCC is subtracted from the radio channel information of the SCC is greater than a threshold.

With reference to any one of the second aspect to the second possible implementation of the second aspect, in a third possible implementation of the second aspect, the radio channel information is any one or a combination of the following:
a CQI, RSRP, or RSRQ.

The CA UE may directly use the SCC as the new PCC. Optionally, the CA UE measures the SCC. When a measurement result meets a measurement threshold, the CA UE uses the SCC as the new PCC.

Specifically, that the CA UE measures the SCC may be that the CA UE measures RSRP and/or RSRQ of the SCC, and that a measurement result meets a measurement threshold may be that a measured RSRP value and/or a measured RSRQ value of the SCC are/is greater than or equal to the measurement threshold. The measurement threshold is a preset empirical value.

Optionally, when there are multiple SCCs, the CA UE may report radio channel information of the multiple SCCs to the base station. When the base station learns that there are two or more SCCs whose radio channel information is greater than the radio channel information of the PCC, the RRC reconfiguration message sent by the base station to the CA UE may include information about the two or more SCCs.

When the CA UE receives the RRC reconfiguration message that includes the information about the two or more SCCs, the CA UE selects, as a new PCC from all SCCs whose information is included in the RRC reconfiguration message, any SCC whose measurement result meets the measurement threshold; or the CA UE selects, as a new PCC from all SCCs whose information is included in the RRC reconfiguration message, an SCC that has largest radio channel information and whose measurement result meets the measurement threshold.

With reference to any one of the second aspect to the third possible implementation of the second aspect, in a fourth possible implementation of the second aspect, the RRC reconfiguration message is further used by the CA UE to use the PCC as a new SCC.

The base station obtains the radio channel information reported by the CA UE. The radio channel information includes the radio channel information of the PCC and the radio channel information of the SCC. When the radio channel information of the SCC is greater than the radio channel information of the PCC, the base station sends the RRC reconfiguration message to the CA UE. The RRC reconfiguration message is used by the CA UE to use the SCC as the new PCC. In this way, a better carrier is selected as a PCC, so as to improve performance of the CA UE.

According to a third aspect, a carrier selection base station in a carrier aggregation technology is provided, including:
a processor, configured to read a program in a memory to perform the following procedure:
obtaining, by using a transceiver, radio channel information reported by CA UE, where the radio channel information includes radio channel information of a PCC and radio channel information of an SCC; and
when the radio channel information of the SCC is greater than the radio channel information of the PCC, sending an RRC reconfiguration message to the CA UE by using the transceiver, where the RRC reconfiguration message is used by the CA UE to use the SCC as a new PCC.

With reference to the third aspect, in a first possible implementation of the third aspect, that the radio channel information of the SCC is greater than the radio channel information of the PCC is specifically:
in a first time period, the radio channel information of the SCC is greater than the radio channel information of the PCC.

With reference to the third aspect, in a second possible implementation of the third aspect, that the radio channel information of the SCC is greater than the radio channel information of the PCC is specifically:
in a second time period, a value obtained after the radio channel information of the PCC is subtracted from the radio channel information of the SCC is greater than a threshold.

With reference to any one of the third aspect to the second possible implementation of the third aspect, in a third possible implementation of the third aspect, the radio channel information is any one or a combination of the following:
a CQI, RSRP, or RSRQ.

With reference to any one of the third aspect to the third possible implementation of the third aspect, in a fourth possible implementation of the third aspect, the RRC reconfiguration message is further used by the CA UE to use the PCC as a new SCC.

The CA UE may directly use the SCC as the new PCC. Optionally, the CA UE measures the SCC. When a measurement result meets a measurement threshold, the CA UE uses the SCC as the new PCC.

Specifically, that the CA UE measures the SCC may be that the CA UE measures RSRP and/or RSRQ of the SCC, and that a measurement result meets a measurement threshold may be that a measured RSRP value and/or a measured RSRQ value of the SCC are/is greater than or equal to the measurement threshold. The measurement threshold is a preset empirical value.

Optionally, when there are multiple SCCs, the CA UE may report radio channel information of the multiple SCCs to the base station. When the base station learns that there are two or more SCCs whose radio channel information is greater than the radio channel information of the PCC, the RRC reconfiguration message sent by the base station to the CA UE may include information about the two or more SCCs.

When the CA UE receives the RRC reconfiguration message that includes the information about the two or more SCCs, the CA UE selects, as a new PCC from all SCCs whose information is included in the RRC reconfiguration message, any SCC whose measurement result meets the measurement threshold; or the CA UE selects, as a new PCC from all SCCs whose information is included in the RRC reconfiguration message, an SCC that has largest radio channel information and whose measurement result meets the measurement threshold.

The base station obtains the radio channel information reported by the CA UE. The radio channel information includes the radio channel information of the PCC and the radio channel information of the SCC. When the radio channel information of the SCC is greater than the radio channel information of the PCC, the base station sends the RRC reconfiguration message to the CA UE. The RRC reconfiguration message is used by the CA UE to use the SCC as the new PCC. In this way, a better carrier is selected as a PCC, so as to improve performance of the CA UE.

According to a fourth aspect, a carrier selection method in a carrier aggregation technology is provided, including:
reporting, by carrier aggregation CA user equipment UE, radio channel information to a base station, where the radio channel information includes radio channel information of a PCC and radio channel information of an SCC;
receiving, by the CA UE, an RRC reconfiguration message sent by the base station, where the RRC reconfiguration message is sent by the base station when the base station determines that the radio channel information of the SCC is greater than the radio channel information of the PCC; and
using, by the CA UE, the SCC as a new PCC.

The CA UE may directly use the SCC as the new PCC. Optionally, the CA UE measures the SCC. When a measurement result meets a measurement threshold, the CA UE uses the SCC as the new PCC.

Specifically, that the CA UE measures the SCC may be that the CA UE measures RSRP and/or RSRQ of the SCC, and that a measurement result meets a measurement threshold may be that a measured RSRP value and/or a measured RSRQ value of the SCC are/is greater than or equal to the measurement threshold. The measurement threshold is a preset empirical value.

Optionally, when there are multiple SCCs, the CA UE may report radio channel information of the multiple SCCs to the base station. When the base station learns that there are two or more SCCs whose radio channel information is greater than the radio channel information of the PCC, the RRC reconfiguration message sent by the base station to the CA UE may include information about the two or more SCCs.

When the CA UE receives the RRC reconfiguration message that includes the information about the two or more SCCs, the CA UE selects, as a new PCC from all SCCs whose information is included in the RRC reconfiguration message, any SCC whose measurement result meets the measurement threshold; or the CA UE selects, as a new PCC from all SCCs whose information is included in the RRC reconfiguration message, an SCC that has largest radio channel information and whose measurement result meets the measurement threshold.

The base station obtains the radio channel information reported by the CA UE. The radio channel information includes the radio channel information of the PCC and the radio channel information of the SCC. When the radio channel information of the SCC is greater than the radio channel information of the PCC, the base station sends the RRC reconfiguration message to the CA UE. The RRC reconfiguration message is used by the CA UE to use the SCC as the new PCC. In this way, a better carrier is selected as a PCC, so as to improve performance of the CA UE.

According to a fifth aspect, a carrier selection method in a carrier aggregation technology is provided, including:
obtaining, by a base station, a priority of a PCC of CA UE and a priority of an SCC of the CA UE. Multiple manners are specifically included. In one manner, the priority of the PCC and the priority of the SCC are pre-stored in the base station, and the base station reads the pre-stored priority of the PCC and the pre-stored priority of the SCC if necessary. In another alternative manner, the base station further includes a network interface, a priority of a first carrier is stored in another network device, and the base station obtains the priority of the PCC of the CA UE and the priority of the SCC of the CA UE by using the network interface if necessary.

When the priority of the SCC is higher than the priority of the PCC, the base station sends an RRC reconfiguration message to the CA UE. The RRC reconfiguration message is used by the CA UE to use the SCC as a new PCC.

The RRC reconfiguration message includes information about one or more SCCs whose priorities are higher than the priority of the PCC and that are determined by the base station.

The base station further sends, to the CA UE, indication information that is used to indicate the priority of the SCC included in the RRC reconfiguration message, so that the CA UE uses the SCC as the new PCC. The CA UE may directly use the SCC as the new PCC. Optionally, the CA UE measures the SCC. When a measurement result meets a measurement threshold, the CA UE uses the SCC as the new PCC; or when a measurement result does not meet a measurement threshold, the CA UE ends the current method procedure.

Optionally, when the base station learns that there are two or more SCCs whose priorities are higher than the priority of the PCC, the RRC reconfiguration message sent by the base station to the CA UE further includes indication information of the priorities of the SCCs.

When the CA UE receives the RRC reconfiguration message that includes the information about the two or more SCCs, the CA UE selects, as a new PCC from all SCCs whose information is included in the RRC reconfiguration message, any SCC whose measurement result meets the measurement threshold; or the CA UE may determine, according to the indication information of the priorities of the SCCs that is included in the RRC reconfiguration message, priorities of all SCCs whose information is included in the RRC reconfiguration message, so that the CA UE selects, as a new PCC from all the SCCs whose information is included in the RRC reconfiguration message, an SCC that has a highest priority and whose measurement result meets the measurement threshold.

Optionally, the priority of the PCC and the priority of the SCC that are preset in the base station may be set by an operator or other personnel, and then priority configuration information is sent to the base station by using higher layer signaling or in a notification manner; an operator or other personnel directly stores priority configuration information in the base station; or priority configuration information is stored in another base station, a server, or a database that is accessible to the base station.

The priority is determined according to a bandwidth and/or a frequency band of a carrier. Specifically, the priority may be set for the carrier according to the bandwidth of the carrier. A wider bandwidth of the carrier indicates a higher priority of the carrier, and a narrower bandwidth of the carrier indicates a lower priority of the carrier. Alternatively, the priority is set for the carrier according to the frequency band of the carrier. A lower frequency band of the carrier indicates a higher priority of the carrier, and a higher frequency band of the carrier indicates a lower priority of the carrier. Alternatively, the priority is set for the carrier according to the bandwidth and the frequency band of the carrier, and a weight value is set for each of the bandwidth and the frequency band. Optionally, a weight value of the bandwidth is greater than a weight value of the frequency band. In this case, the bandwidth may account for a larger proportion in determining the priority of the carrier. Optionally, a weight value of the frequency band is greater than a weight value of the bandwidth. In this case, the frequency band may account for a larger proportion in determining the priority of the carrier.

In this way, a component carrier with a high priority is selected as a PCC for the CA UE in a camping-on process of the CA UE, so as to improve performance of the CA UE.

According to a sixth aspect, a carrier selection method in a carrier aggregation technology is provided, including:
receiving, by CA UE, an RRC reconfiguration message sent by a base station, where the RRC reconfiguration message is sent by the base station when the base station determines that a priority of an SCC is higher than a priority of a PCC; and
using, by the CA UE, the SCC as a new PCC.

The CA UE further receives indication information that is sent by the base station and that is used to indicate the priority of the SCC included in the RRC reconfiguration message, so that the CA UE uses the SCC as the new PCC. Specifically, if the RRC reconfiguration message received by the CA UE includes only one SCC, the CA UE measures the SCC included in the RRC reconfiguration message. When a measurement result meets a measurement threshold, the CA UE uses the SCC as the new PCC.

The CA UE may directly use the SCC as the new PCC. Optionally, the CA UE measures the SCC. When a measurement result meets a measurement threshold, the CA UE uses the SCC as the new PCC; or when a measurement result does not meet a measurement threshold, the CA UE ends the current method procedure.

Optionally, when the base station learns that there are two or more SCCs whose priorities are higher than the priority of the PCC, the RRC reconfiguration message sent by the base station to the CA UE further includes indication information of the priorities of the SCCs.

When the CA UE receives the RRC reconfiguration message that includes the information about the two or more SCCs, the CA UE selects, as a new PCC from all SCCs whose information is included in the RRC reconfiguration message, any SCC whose measurement result meets the measurement threshold; or the CA UE may determine, according to the indication information of the priorities of the SCCs that is included in the RRC reconfiguration message, priorities of all SCCs whose information is included in the RRC reconfiguration message, so that the CA UE selects, as a new PCC from all the SCCs whose information is included in the RRC reconfiguration message, an SCC that has a highest priority and whose measurement result meets the measurement threshold.

In this way, a component carrier with a high priority is selected as a PCC for the CA UE in a camping-on process of the CA UE, so as to improve performance of the CA UE.

According to a seventh aspect, a carrier selection method in a carrier aggregation technology is provided, including:
obtaining, by a base station, a priority of a first carrier when carrier aggregation CA user equipment UE establishes an RRC connection to the base station on the first carrier. Multiple manners are specifically included. In one manner, the priority of the first carrier is pre-stored in the base station, and the base station reads the pre-stored priority of the first carrier if necessary. In another alternative manner, the base station further includes a network interface, the priority of the first carrier is stored in another network device, and the base station obtains the priority of the first carrier of the CA UE by using the network interface if necessary.

If the priority of the first carrier is lower than a priority of a second carrier, the base station delivers an RRC reconfiguration message to the CA UE. The RRC reconfiguration message includes information about the second carrier. The RRC reconfiguration message is used by the CA UE to measure the second carrier. When a measurement result meets a measurement threshold, the second carrier is used as a PCC of the CA UE. The first carrier and the second carrier are carriers that can support the CA UE in performing CA.

Specifically, if the RRC reconfiguration message received by the CA UE includes only one second carrier, the CA UE measures the second carrier included in the RRC reconfiguration message. When the measurement result meets the measurement threshold, the CA UE uses the second carrier as the PCC. Optionally, the CA UE may directly use the second carrier as the PCC.

If the RRC reconfiguration message received by the CA UE includes at least two second carriers, in one manner, the CA UE selects, as a new PCC from all second carriers included in the RRC reconfiguration message, any second carrier whose measurement result meets the measurement threshold; in another manner, the CA UE selects, as a PCC from all second carriers included in the RRC reconfiguration message, a second carrier that has a highest priority and whose measurement result meets the measurement threshold. In the another manner, the method further includes: receiving, by the CA UE, indication information that is sent by the base station and that is used to indicate a priority of each second carrier.

It can be learned that, when the CA UE chooses to camp on the base station on the first carrier, the base station obtains the priority of the first carrier. If the priority of the first carrier is lower than the priority of the second carrier, the base station delivers the RRC reconfiguration message to the CA UE. The RRC reconfiguration message includes the information about the second carrier. The CA UE measures the second carrier. When the measurement result meets the measurement threshold, the second carrier is used as the PCC of the CA UE. The first carrier and the second carrier are carriers that can support the CA UE in performing CA. In this way, a component carrier with a high priority is selected as a PCC for the CA UE in a camping-on process of the CA UE, so as to improve performance of the CA UE.

According to an eighth aspect, a carrier selection method in a carrier aggregation technology is provided, including:
establishing, by carrier aggregation CA user equipment UE, an RRC connection to a base station on a first carrier;
receiving, by the CA UE, an RRC reconfiguration message delivered by the base station, where the RRC reconfiguration message is sent by the base station when the base station determines that a priority of a first carrier is lower than a priority of a second carrier, and the RRC reconfiguration message includes information about the second carrier; and
measuring, by the CA UE, the second carrier, and using the second carrier as a PCC of the CA UE when a measurement result meets a measurement threshold, where the first carrier and the second carrier are carriers that can support the CA UE in performing CA.

Specifically, if the RRC reconfiguration message received by the CA UE includes only one second carrier, the CA UE measures the second carrier included in the RRC reconfiguration message. When the measurement result meets the measurement threshold, the CA UE uses the second carrier as the PCC. Optionally, the CA UE may directly use the second carrier as the PCC.

If the RRC reconfiguration message received by the CA UE includes at least two second carriers, in one manner, the CA UE selects, as a new PCC from all second carriers included in the RRC reconfiguration message, any second carrier whose measurement result meets the measurement threshold; in another manner, the CA UE selects, as a PCC from all second carriers included in the RRC reconfiguration message, a second carrier that has a highest priority and whose measurement result meets the measurement threshold. In the another manner, the method further includes: receiving, by the CA UE, indication information that is sent by the base station and that is used to indicate a priority of each second carrier.

In this way, a component carrier with a high priority is selected as a PCC for the CA UE in a camping-on process of the CA UE, so as to improve performance of the CA UE.

In the embodiments of the present invention, the base station obtains the radio channel information reported by the CA UE. The radio channel information includes the radio channel information of the PCC and the radio channel information of the SCC. When the radio channel information of the SCC is greater than the radio channel information of the PCC, the base station sends the RRC reconfiguration message to the CA UE. The RRC reconfiguration message is used by the CA UE to use the SCC as the new PCC. In this way, a better carrier is selected as a PCC, so as to improve performance of the CA UE.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and persons of ordinary skill in the art may still derive other drawings from these accompanying drawings without creative efforts.
FIG. 1 is a schematic flowchart of a carrier selection method in a carrier aggregation technology according to an embodiment of the present invention;
FIG. 2a is a schematic flowchart of a carrier selection method in a carrier aggregation technology according to an embodiment of the present invention;
FIG. 2b is a schematic flowchart of a carrier selection method in a carrier aggregation technology according to an embodiment of the present invention;
FIG. 3a is a schematic structural diagram of a carrier selection base station in a carrier aggregation technology according to an embodiment of the present invention;
FIG. 3b is a schematic structural diagram of carrier selection CA UE in a carrier aggregation technology according to an embodiment of the present invention;
FIG. 3c is a schematic structural diagram of a carrier selection base station in a carrier aggregation technology according to an embodiment of the present invention;
FIG. 3d is a schematic structural diagram of carrier selection CA UE in a carrier aggregation technology according to an embodiment of the present invention;
FIG. 3e is a schematic structural diagram of a carrier selection base station in a carrier aggregation technology according to an embodiment of the present invention;
FIG. 3f is a schematic structural diagram of carrier selection CA UE in a carrier aggregation technology according to an embodiment of the present invention;
FIG. 4a is a schematic structural diagram of a carrier selection base station in a carrier aggregation technology according to an embodiment of the present invention;
FIG. 4b is a schematic structural diagram of carrier selection CA UE in a carrier aggregation technology according to an embodiment of the present invention;
FIG. 4c is a schematic structural diagram of a carrier selection base station in a carrier aggregation technology according to an embodiment of the present invention;
FIG. 4d is a schematic structural diagram of carrier selection CA UE in a carrier aggregation technology according to an embodiment of the present invention;
FIG. 4e is a schematic structural diagram of a carrier selection base station in a carrier aggregation technology according to an embodiment of the present invention; and
FIG. 4f is a schematic structural diagram of carrier selection CA UE in a carrier aggregation technology according to an embodiment of the present invention.

### DESCRIPTION OF EMBODIMENTS

To make the objectives, technical solutions, and advantages of the present invention clearer and more comprehensible, the following further describes the present invention in detail with reference to the accompanying drawings and embodiments. It should be understood that the specific embodiments described herein are merely used to explain the present invention but are not intended to limit the present invention.

The embodiments of the present invention are applicable to LTE and another network that can support a carrier aggregation technology, for example, a Universal Mobile Telecommunications System terrestrial radio access network (Universal Mobile Telecommunications System Terrestrial Radio Access Network, UTRAN) that supports a dual carrier (Dual Carrier) technology, or a Global System for Mobile Communications Enhanced Data rates for GSM Evolution radio access network (Global System for Mobile Communications Enhanced Data Rates for GSM Evolution Radio Access Network, GERAN) that supports a downlink dual carrier (Downlink Dual Carrier) technology.

In the embodiments of the present invention, the term "CA UE" is specifically user equipment that has a carrier aggregation (carrier aggregation, CA) capability and that performs carrier aggregation. The term "user equipment" includes but is not limited to a mobile station, a fixed or mobile subscriber unit, a pager, a cellular phone, a personal digital assistant (Personal Digital Assistant, PDA), a computer, or any other type of user equipment that can work in a wireless environment. The term "base station" includes but is not limited to a base station, a node, a station controller, an access point (Access point, AP), or any other type of interface device that can work in a wireless environment. The term "component carrier" is specifically a carrier on which CA can be performed.

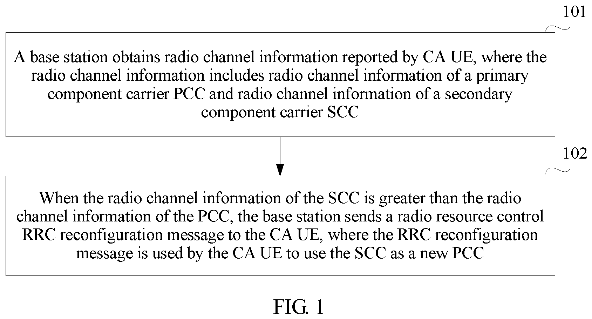

The embodiments of the present invention can be applied to various CA scenarios that are not limited to intra-station CA, inter-station CA, heterogeneous network CA, and the like. FIG. 1 is a schematic flowchart of a carrier selection method in a carrier aggregation technology according to an embodiment of the present invention.

As shown in FIG. 1, this embodiment of the present invention provides a carrier selection method in a carrier aggregation technology, including:
Step 101: A base station obtains radio channel information reported by CA UE, where the radio channel information includes radio channel information of a PCC and radio channel information of an SCC.
Step 102: When the radio channel information of the SCC is greater than the radio channel information of the PCC, the base station sends an RRC reconfiguration message to the CA UE, where the RRC reconfiguration message is used by the CA UE to use the SCC as a new PCC.

Optionally, the radio channel information is any one or a combination of the following: a CQI, RSRP, or RSRQ.

Optionally, that the radio channel information of the SCC is greater than the radio channel information of the PCC is: in a first time period, the radio channel information of the SCC is greater than the radio channel information of the PCC; or in a second time period, a value obtained after the radio channel information of the PCC is subtracted from the radio channel information of the SCC is greater than a threshold.

The first time period and the second time period are preset empirical values. The first time period may be the same as or different from the second time period. Persons skilled in the art preset the foregoing threshold according to a specific working environment or a type of radio channel information.

Optionally, the RRC reconfiguration message is further used by the CA UE to use the PCC as a new SCC.

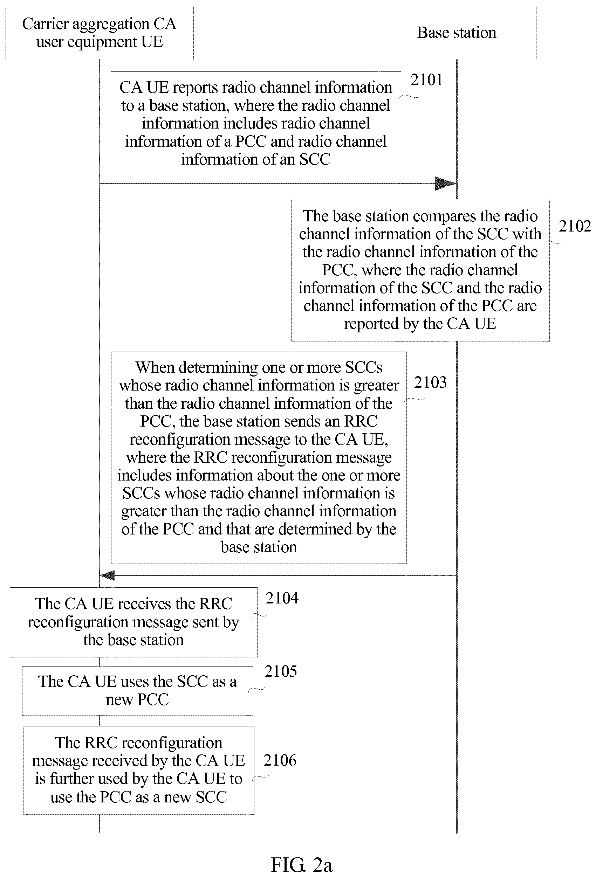

To describe the foregoing method procedure in more details, as shown in FIG. 2a, FIG. 2a is a schematic flowchart of a carrier selection method in a carrier aggregation technology according to an embodiment of the present invention.

Step 2101: CA UE reports radio channel information to a base station, where the radio channel information includes radio channel information of a PCC and radio channel information of an SCC. Optionally, the CA UE periodically reports the radio channel information to the base station.

Step 2102: The base station compares the radio channel information of the SCC with the radio channel information of the PCC, where the radio channel information of the SCC and the radio channel information of the PCC are reported by the CA UE; and when determining that the radio channel information of the SCC is greater than the radio channel information of the PCC, performs step 2106.

Optionally, when the CA UE periodically reports the radio channel information to the base station, the base station periodically compares the radio channel information of the SCC with the radio channel information of the PCC. The radio channel information of the SCC and the radio channel information of the PCC are reported by the CA UE.

Step 2103: The base station sends an RRC reconfiguration message to the CA UE, where the RRC reconfiguration message includes information about an SCC whose radio channel information is greater than the radio channel information of the PCC and that is determined by the base station. Specifically, the information about the SCC may be a frequency channel number of the SCC or other information for identifying the SCC.

Step 2104: The CA UE receives the RRC reconfiguration message sent by the base station.

Step 2105: The CA UE uses the SCC as a new PCC.

The CA UE may directly use the SCC as the new PCC. Optionally, the CA UE measures the SCC. When a measurement result meets a measurement threshold, the CA UE uses the SCC as the new PCC; or when a measurement result does not meet a measurement threshold, the CA UE ends the current method procedure.

Specifically, that the CA UE measures the SCC may be that the CA UE measures RSRP and/or RSRQ of the SCC, and that a measurement result meets a measurement threshold may be that a measured RSRP value and/or a measured RSRQ value of the SCC are/is greater than or equal to the measurement threshold. The measurement threshold is a preset empirical value.

Optionally, when there are multiple SCCs, the CA UE may report radio channel information of the multiple SCCs to the base station. When the base station learns that there are two or more SCCs whose radio channel information is greater than the radio channel information of the PCC, the RRC reconfiguration message sent by the base station to the CA UE may include information about the two or more SCCs.

When the CA UE receives the RRC reconfiguration message that includes the information about the two or more SCCs, the CA UE selects, as a new PCC from all SCCs whose information is included in the RRC reconfiguration message, any SCC whose measurement result meets the measurement threshold; or the CA UE selects, as a new PCC from all SCCs whose information is included in the RRC reconfiguration message, an SCC that has largest radio channel information and whose measurement result meets the measurement threshold.

Optionally, the method further includes:
Step 2106: The RRC reconfiguration message received by the CA UE is further used by the CA UE to use the PCC as a new SCC.

To more clearly describe the foregoing method, description is given in this embodiment of the present invention by using an example in which five carriers are used for carrier aggregation.

Currently, the CA UE obtains five carriers: a carrier F1, a carrier F2, a carrier F3, a carrier F4, and a carrier F5 by means of listening. The CA UE currently camps on the carrier F4. The carrier F4 is a current PCC of the CA UE, and the carrier F1, the carrier F2, the carrier F3, and the carrier F5 are SCCs of the CA UE.

The CA UE reports radio channel information, that is, CQIs of the carrier F1, the carrier F2, the carrier F3, the carrier F4, and the carrier F5 to the base station. In descending order of channel quality, the five carriers including the carrier F1, the carrier F2, the carrier F3, the carrier F4, and the carrier F5 are sequenced as follows: the carrier F1, the carrier F2, the carrier F3, the carrier F4, and the carrier F5. That is, the carrier F1 has best channel quality, and the carrier F5 has worst channel quality.

In a second time period, the base station obtains a value obtained after a CQI of the PCC is subtracted from a CQI of each SCC.

For example, the base station determines that SCCs whose values obtained after the radio channel information of the PCC is subtracted from the radio channel information of the SCCs are greater than a threshold are the carrier F1, the carrier F2, and the carrier F3.

The base station sends the RRC reconfiguration message to the CA UE. The RRC reconfiguration message includes information about the carrier F1, the carrier F2, and the carrier F3. For example, the information may be a frequency channel number of the carrier F1, a frequency channel number of the carrier F2, and a frequency channel number of the carrier F3.

The CA UE measures RSRP of the carrier F1, RSRP of the carrier F2, and RSRP of the carrier F3. Measurement results of the carrier F1, the carrier F2, and the carrier F3 all meet the measurement threshold. The CA UE uses, as a new PCC, an SCC, that is, the carrier F1, that has largest radio channel information in all SCCs that meet the measurement threshold. The CA UE camps on the carrier F1, and uses the carrier F4 as a new SCC.

It can be learned that, the base station obtains the radio channel information of the PCC and the radio channel information of the SCC that are reported by the CA UE. When the radio channel information of the SCC is greater than the radio channel information of the PCC, the base station sends the RRC reconfiguration message to the CA UE, so that the CA UE uses the SCC as the new PCC. A better carrier is selected as a PCC, so as to improve performance of the CA UE in indicators such as an access success rate, a re-establishment success rate, a call drop rate, a handover success rate, and a user rate. User experience is also improved, and a network key performance indicator (Key Performance Indicator, KPI) is improved.

In the foregoing method, the base station obtains radio channel information of different component carriers, to select a better carrier as a primary component carrier of the CA UE. Optionally, the base station may obtain priority information of the different component carriers, and select a carrier with a high priority as the primary component carrier of the CA UE according to the priorities of the component carriers.

Specifically, the base station obtains a priority of the PCC of the CA UE and a priority of the SCC of the CA UE. The base station compares the priority of the SCC of the CA UE with the priority of the PCC of the CA UE, and sends the RRC reconfiguration message to the CA UE when determining that the priority of the SCC is higher than the priority of the PCC. The RRC reconfiguration message includes information about the SCC whose priority is higher than the priority of the PCC. The CA UE receives the RRC reconfiguration message sent by the base station, and uses the SCC as the new PCC. Optionally, the CA UE uses the PCC as the new SCC. The RRC reconfiguration message further includes indication information of the priority of the SCC.

In the foregoing method procedure, the CA UE may directly use the SCC as the new PCC. Optionally, the CA UE measures the SCC. When a measurement result meets a measurement threshold, the CA UE uses the SCC as the new PCC; or when a measurement result does not meet a measurement threshold, the CA UE ends the current method procedure.

Optionally, when the base station learns that there are two or more SCCs whose priorities are higher than the priority of the PCC, the RRC reconfiguration message sent by the base station to the CA UE further includes indication information of the priorities of the SCCs.

When the CA UE receives the RRC reconfiguration message that includes the information about the two or more SCCs, the CA UE selects, as a new PCC from all SCCs whose information is included in the RRC reconfiguration message, any SCC whose measurement result meets the measurement threshold; or the CA UE may determine, according to the indication information of the priorities of the SCCs that is included in the RRC reconfiguration message, priorities of all SCCs whose information is included in the RRC reconfiguration message, so that the CA UE selects, as a new PCC from all the SCCs whose information is included in the RRC reconfiguration message, an SCC that has a highest priority and whose measurement result meets the measurement threshold.

Optionally, the priority of the PCC and the priority of the SCC that are preset in the base station may be set by an operator or other personnel, and then priority configuration information is sent to the base station by using higher layer signaling or in a notification manner; an operator or other personnel directly stores priority configuration information in the base station; or priority configuration information is stored in another base station, a server, or a database that is accessible to the base station.

The priority is determined according to a bandwidth and/or a frequency band of a carrier. Specifically, the priority may be set for the carrier according to the bandwidth of the carrier. A wider bandwidth of the carrier indicates a higher priority of the carrier, and a narrower bandwidth of the carrier indicates a lower priority of the carrier. Alternatively, the priority is set for the carrier according to the frequency band of the carrier. A lower frequency band of the carrier indicates a higher priority of the carrier, and a higher frequency band of the carrier indicates a lower priority of the carrier. Alternatively, the priority is set for the carrier according to the bandwidth and the frequency band of the carrier, and a weight value is set for each of the bandwidth and the frequency band. Optionally, a weight value of the bandwidth is greater than a weight value of the frequency band. In this case, the bandwidth may account for a larger proportion in determining the priority of the carrier. Optionally, a weight value of the frequency band is greater than a weight value of the bandwidth. In this case, the frequency band may account for a larger proportion in determining the priority of the carrier.

To more clearly describe the foregoing method procedure, this embodiment of the present invention provides the following example:
An operator has X carriers: a carrier F1, a carrier F2, a carrier F3, ..., and a carrier Fx. The operator configures the X carriers as carriers on which carrier aggregation can be performed, and sets priorities of the X carriers. The operator sets a priority for each carrier according to bandwidths of the X carriers. In descending order of priorities, the X carriers are sequenced as follows: the carrier F1, the carrier F2, the carrier F3, ..., and the carrier Fx. That is, the carrier F1 has a highest priority, and the carrier Fx has a lowest priority.

The operator sends the priorities of the carriers to the base station by using higher layer signaling.

Currently, the CA user equipment obtains five carriers: the carrier F1, the carrier F2, the carrier F3, a carrier F4, and a carrier F5 by means of listening. The CA UE currently camps on the carrier F4, and the carrier F4 is a current PCC of the CA UE. The carrier F1, the carrier F2, the carrier F3, and the carrier F5 are SCCs of the CA UE.

The base station obtains priorities of the carrier F1, the carrier F2, the carrier F3, the carrier F4, and the carrier F5, and determines whether the priority of the SCC is higher than the priority of the PCC. When determining that there is an SCC whose priority is higher than the priority of the PCC, the base station sends reconfiguration information to the CA UE. In this case, the base station determines that SCCs whose priorities are higher than the priority of the PCC are the carrier F1, the carrier F2, and the carrier F3.

The base station sends the RRC reconfiguration message to the CA UE. The RRC reconfiguration message includes information about the carrier F1, the carrier F2, and the carrier F3. For example, the information may be a frequency channel number of the carrier F1, a frequency channel number of the carrier F2, and a frequency channel number of the carrier F3. The base station further sends, to the CA UE, indication information that is used to indicate the priorities of the SCCs. Specifically, the indication information that is used to indicate the priorities of the SCCs may be: the priority of the carrier F1 is the highest, the priority of the carrier F2 is lower than the priority of the carrier F1 and higher than the priority of the carrier F3, and the priority of the carrier F3 is the lowest.

The CA UE measures RSRP of the carrier F1, RSRP of the carrier F2, and RSRP of the carrier F3. Measurement results of the carrier F1, the carrier F2, and the carrier F3 all meet the measurement threshold. The CA UE uses, as a new PCC, an SCC, that is, the carrier F1, that has a highest priority in all SCCs that meet the measurement threshold.

In a camping-on process of the CA UE, the base station may select a PCC for the CA UE according to a priority of a component carrier.

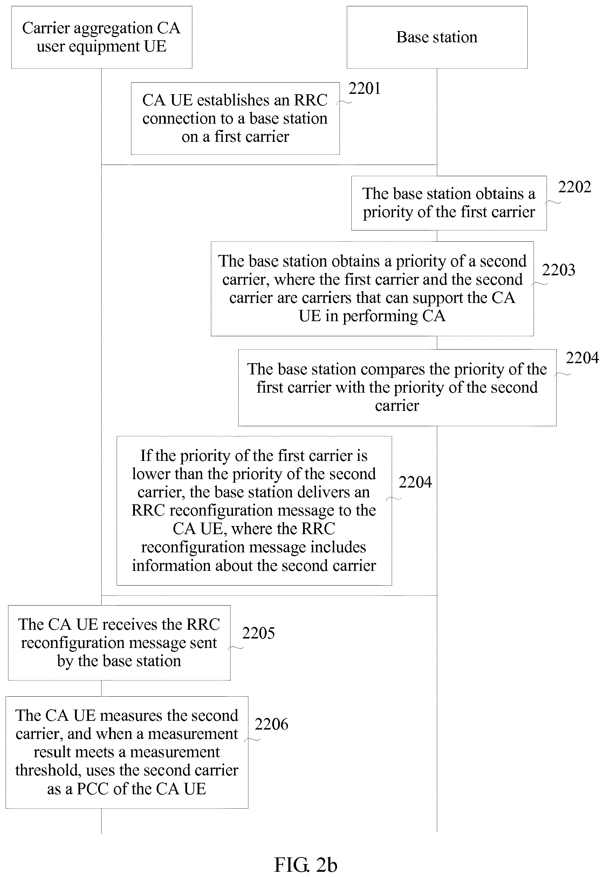

FIG. 2b is a schematic flowchart of a carrier selection method in a carrier aggregation technology according to an embodiment of the present invention. As shown in FIG. 2b, this embodiment of the present invention provides a carrier selection method in a carrier aggregation technology, including:
Step 2201: CA UE establishes an RRC connection to a base station on a first carrier.
Step 2202: The base station obtains a priority of the first carrier.
Step 2203: The base station obtains a priority of a second carrier, where the first carrier and the second carrier are carriers that can support the CA UE in performing CA.
Step 2204: The base station compares the priority of the first carrier with the priority of the second carrier, and if the priority of the first carrier is lower than the priority of the second carrier, the base station delivers an RRC reconfiguration message to the CA UE. The RRC reconfiguration message includes information about the second carrier. The information about the second carrier may be a frequency channel number of the second carrier or other information for identifying the second carrier. The RRC reconfiguration message is used by the CA UE to measure the second carrier. When a measurement result meets a measurement threshold, the second carrier is used as a PCC of the CA UE.
Step 2205: The CA UE receives the RRC reconfiguration message sent by the base station.
Step 2206: The CA UE measures the second carrier, and when a measurement result meets a measurement threshold, uses the second carrier as a PCC of the CA UE.

Specifically, if the RRC reconfiguration message received by the CA UE includes only one second carrier, the CA UE measures the second carrier included in the RRC reconfiguration message. When the measurement result meets the measurement threshold, the CA UE uses the second carrier as the PCC. Optionally, the CA UE may directly use the second carrier as the PCC.

If the RRC reconfiguration message received by the CA UE includes at least two second carriers, in one manner, the CA UE selects, as a new PCC from all second carriers included in the RRC reconfiguration message, any second carrier whose measurement result meets the measurement threshold; in another manner, the CA UE selects, as a PCC from all second carriers included in the RRC reconfiguration message, a second carrier that has a highest priority and whose measurement result meets the measurement threshold. In the another manner, the method further includes: receiving, by the CA UE, indication information that is sent by the base station and that is used to indicate a priority of each second carrier.

It can be learned that, when the CA UE chooses to camp on the base station on the first carrier, the base station obtains the priority of the first carrier. If the priority of the first carrier is lower than the priority of the second carrier, the base station delivers the RRC reconfiguration message to the CA UE. The RRC reconfiguration message includes the information about the second carrier. The CA UE measures the second carrier. When the measurement result meets the measurement threshold, the second carrier is used as the PCC of the CA UE. The first carrier and the second carrier are carriers that can support the CA UE in performing CA. In this way, a component carrier with a high priority is selected as a PCC for the CA UE in a camping-on process of the CA UE, so as to improve performance of the CA UE in indicators such as an access success rate, a re-establishment success rate, a call drop rate, a handover success rate, and a user rate. User experience is also improved, and a network KPI is improved.

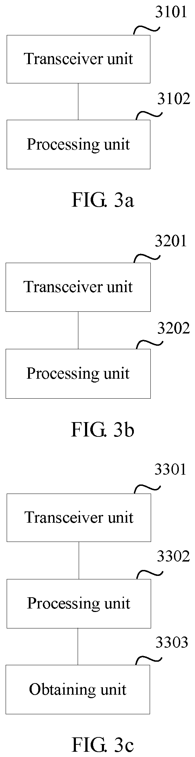

FIG. 3a is a schematic structural diagram of a carrier selection base station in a carrier aggregation technology according to an embodiment of the present invention.

As shown in FIG. 3a, this embodiment of the present invention provides a carrier selection base station in a carrier aggregation technology. The carrier selection base station is configured to perform the method shown in FIG. 1 and/or FIG. 2a, and includes a transceiver unit 3101 and a processing unit 3102.

The transceiver unit is configured to obtain radio channel information reported by CA UE. The radio channel information includes radio channel information of a PCC and radio channel information of an SCC.

The processing unit is configured to: when the radio channel information of the SCC is greater than the radio channel information of the PCC, send an RRC reconfiguration message to the CA UE by using the transceiver unit. The RRC reconfiguration message is used by the CA UE to use the SCC as a new PCC.

Optionally, that the radio channel information of the SCC is greater than the radio channel information of the PCC is specifically:
in a first time period, the radio channel information of the SCC is greater than the radio channel information of the PCC.

Optionally, that the radio channel information of the SCC is greater than the radio channel information of the PCC is specifically:
in a second time period, a value obtained after the radio channel information of the PCC is subtracted from the radio channel information of the SCC is greater than a threshold.

Optionally, the radio channel information is any one or a combination of the following:
a CQI, RSRP, or RSRQ.

Optionally, the RRC reconfiguration message is further used by the CA UE to use the PCC as a new SCC.

FIG. 3b is a schematic structural diagram of carrier selection CA UE in a carrier aggregation technology according to an embodiment of the present invention.

Based on a same idea, as shown in FIG. 3b, this embodiment of the present invention provides carrier selection CA UE in a carrier aggregation technology. The carrier selection CA UE is configured to perform the method shown in FIG. 2a, and includes a transceiver unit 3201 and a processing unit 3202.

The transceiver unit is configured to: report radio channel information to a base station, where the radio channel information includes radio channel information of a PCC and radio channel information of an SCC; and receive an RRC reconfiguration message sent by the base station. The RRC reconfiguration message is sent by the base station when the base station determines that the radio channel information of the SCC is greater than the radio channel information of the PCC.

The processing unit is configured to use the SCC as a new PCC.

It can be learned that, the base station obtains the radio channel information of the PCC and the radio channel information of the SCC that are reported by the CA UE. When the radio channel information of the SCC is greater than the radio channel information of the PCC, the base station sends the RRC reconfiguration message to the CA UE, so that the CA UE uses the SCC as the new PCC. In this way, a better carrier is selected as a PCC, so as to improve performance of the CA UE.

FIG. 3c is a schematic structural diagram of a carrier selection base station in a carrier aggregation technology according to an embodiment of the present invention.

Based on a same idea, as shown in FIG. 3c, this embodiment of the present invention provides a carrier selection base station in a carrier aggregation technology. The carrier selection base station includes a transceiver unit 3301 and a processing unit 3302.

The processing unit is configured to obtain a priority of a PCC of CA UE and a priority of an SCC of the CA UE. Multiple manners may be specifically included. In one manner, the priority of the PCC and the priority of the SCC are pre-stored in the base station, and the base station reads the pre-stored priority of the PCC and the pre-stored priority of the SCC by using the processing unit if necessary. In another alternative manner, the base station further includes an obtaining unit 3303. The priority of the PCC and the priority of the SCC are stored in another network device. The base station obtains the priority of the PCC of the CA UE and the priority of the SCC of the CA UE by using the obtaining unit if necessary.

The processing unit is further configured to: when the priority of the SCC is higher than the priority of the PCC, send an RRC reconfiguration message to the CA UE by using the transceiver unit. The RRC reconfiguration message is used by the CA UE to use the SCC as a new PCC.

Optionally, the priority is determined according to a bandwidth and/or a frequency band of a carrier.

Optionally, the RRC reconfiguration message is further used by the CA UE to use the PCC as a new SCC.

Optionally, the RRC reconfiguration message includes information about at least two SCCs.

The transceiver unit is further configured to:
send, to the CA UE, indication information that is used to indicate a priority of each SCC, so that the CA UE measures each SCC and uses, as a new PCC, an SCC that has a highest priority in SCCs whose measurement results meet a measurement threshold. Optionally, the indication information that indicates the priority of each SCC is included in the RRC reconfiguration message that includes the at least two SCCs.

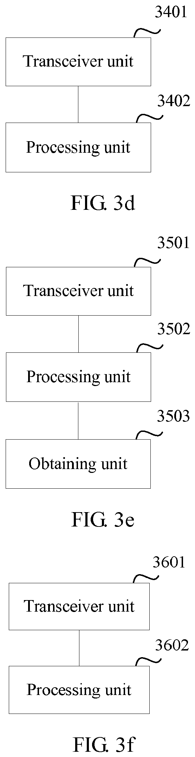

FIG. 3d is a schematic structural diagram of carrier selection CA UE in a carrier aggregation technology according to an embodiment of the present invention.

Based on a same idea, as shown in FIG. 3d, this embodiment of the present invention provides carrier selection CA UE in a carrier aggregation technology. The carrier selection CA UE includes a transceiver unit 3401 and a processing unit 3402.

The transceiver unit is configured to receive an RRC reconfiguration message sent by a base station. The RRC reconfiguration message is sent by the base station when the base station determines that a priority of an SCC is higher than a priority of a PCC.

The processing unit is configured to use the SCC as a new PCC.

Optionally, the priority is determined according to a bandwidth and/or a frequency band of a carrier.

Optionally, the processing unit is further configured to use the PCC as a new SCC.

Optionally, the RRC reconfiguration message includes information about at least two SCCs.

The transceiver unit is further configured to:
receive indication information that is sent by the base station and that is used to indicate a priority of each SCC.

The processing unit is specifically configured to:
measure each SCC, and use, as a new PCC, an SCC that has a highest priority in SCCs whose measurement results meet a measurement threshold.

It can be learned that, the priority of the PCC of the CA UE and the priority of the SCC of the CA UE are obtained. When the priority of the SCC is higher than the priority of the PCC, the RRC reconfiguration message is sent to the CA UE by using the transceiver unit. The RRC reconfiguration message is used by the CA UE to use the SCC as the new PCC. In this way, a component carrier with a high priority is selected as a PCC for the CA UE in a camping-on process of the CA UE, so as to improve performance of the CA UE.

FIG. 3e is a schematic structural diagram of a carrier selection base station in a carrier aggregation technology according to an embodiment of the present invention.

As shown in FIG. 3e, this embodiment of the present invention provides a carrier selection base station in a carrier aggregation technology. The carrier selection base station is configured to perform the method shown in FIG. 2b, and includes a transceiver unit 3501 and a processing unit 3502.

The processing unit is configured to obtain a priority of a first carrier when CA UE establishes an RRC connection to the base station on the first carrier. Multiple manners are specifically included. In one manner, the priority of the first carrier is pre-stored in the base station, and the base station reads the pre-stored priority of the first carrier by using the processing unit if necessary. In another alternative manner, the base station further includes an obtaining unit 3503, the priority of the first carrier is stored in another network device, and the base station obtains the priority of the first carrier of the CA UE by using the obtaining unit if necessary.

The processing unit is further configured to: if the priority of the first carrier is lower than a priority of a second carrier, deliver an RRC reconfiguration message to the CA UE by using the transceiver unit, where the RRC reconfiguration message includes information about the second carrier, and the RRC reconfiguration message is used by the CA UE to measure the second carrier; and when a measurement result meets a measurement threshold, use the second carrier as a PCC of the CA UE, where the first carrier and the second carrier are carriers that can support the CA UE in performing CA.

Optionally, the priority is determined according to a bandwidth and/or a frequency band of a carrier.

Optionally, the processing unit is further configured to:
obtain the priority of the second carrier before the RRC reconfiguration message is delivered to the CA UE.

Optionally, the RRC reconfiguration message includes information about at least two second carriers.

The transceiver unit is further configured to:
send, to the CA UE, indication information that is used to indicate a priority of each second carrier, so that the CA UE measures each second carrier and uses, as a new PCC, a second carrier that has a highest priority in second carriers whose measurement results meet the measurement threshold.

FIG. 3f is a schematic structural diagram of carrier selection CA UE in a carrier aggregation technology according to an embodiment of the present invention.

Based on a same idea, as shown in FIG. 3f, this embodiment of the present invention provides carrier selection CA UE in a carrier aggregation technology. The carrier selection CA UE is configured to perform the method shown in FIG. 2b, and includes a transceiver unit 3601 and a processing unit 3602.

The transceiver unit is configured to: receive an RRC reconfiguration message delivered by a base station. The RRC reconfiguration message is sent by the base station when the base station obtains a priority of a first carrier and determines that the priority of the first carrier is lower than a priority of a second carrier, and the RRC reconfiguration message includes information about the second carrier.

The processing unit is configured to: when an RRC connection to the base station is established on the first carrier, measure the second carrier, and use the second carrier as a PCC of the CA UE when a measurement result meets a measurement threshold. The first carrier and the second carrier are carriers that can support the CA UE in performing CA.

Optionally, the priority is determined according to a bandwidth and/or a frequency band of a carrier.

The RRC reconfiguration message includes information about at least two second carriers.

The transceiver unit is further configured to:
receive indication information that is sent by the base station and that is used to indicate a priority of each second carrier.

The processing unit is specifically configured to:
measure each second carrier, and use, as a new PCC, the second carrier that has a highest priority in second carriers whose measurement results meet the measurement threshold.

It can be learned that, when the CA UE chooses to camp on the base station on the first carrier, the base station obtains the priority of the first carrier. If the priority of the first carrier is lower than the priority of the second carrier, the base station delivers the RRC reconfiguration message to the CA UE. The RRC reconfiguration message includes the information about the second carrier. The CA UE measures the second carrier. When the measurement result meets the measurement threshold, the second carrier is used as the PCC of the CA UE. The first carrier and the second carrier are carriers that can support the CA UE in performing CA. In this way, a component carrier with a high priority is selected as a PCC for the CA UE in a camping-on process of the CA UE, so as to improve performance of the CA UE.

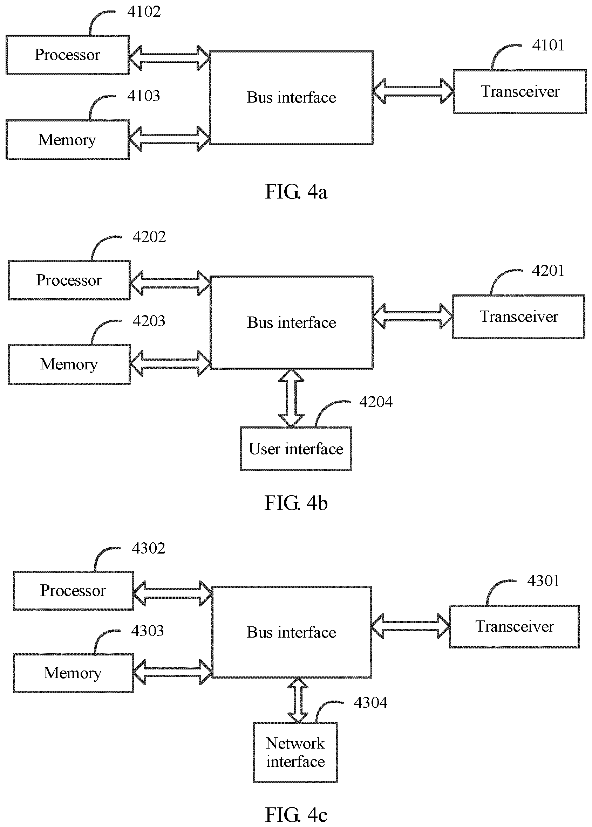

FIG. 4a is a schematic structural diagram of a carrier selection base station in a carrier aggregation technology according to an embodiment of the present invention.

Based on a same idea, as shown in FIG. 4a, this embodiment of the present invention provides a carrier selection base station in a carrier aggregation technology. The carrier selection base station includes a transceiver 4101, a processor 4102, and a memory 4103.

The processor is configured to read a program in the memory to perform the method shown in FIG. 1 and/or FIG. 2a.

FIG. 4b is a schematic structural diagram of carrier selection CA UE in a carrier aggregation technology according to an embodiment of the present invention.

Based on a same idea, as shown in FIG. 4b, this embodiment of the present invention provides carrier selection CA UE in a carrier aggregation technology. The carrier selection CA UE includes a transceiver 4201, a processor 4202, a memory 4203, and a user interface 4204.

The processor is configured to read a program in the memory to perform the method shown in FIG. 2a.

FIG. 4c is a schematic structural diagram of a carrier selection base station in a carrier aggregation technology according to an embodiment of the present invention.

Based on a same idea, as shown in FIG. 4c, this embodiment of the present invention provides a carrier selection base station in a carrier aggregation technology. The carrier selection base station includes a transceiver 4301, a processor 4302, and a memory 4303.

The processor is configured to read a program in the memory to perform the following procedure:
obtaining a priority of a PCC of CA UE and a priority of an SCC of the CA UE. Multiple manners may be specifically included. In one manner, the priority of the PCC and the priority of the SCC are pre-stored in the base station, and the base station reads the pre-stored priority of the PCC and the pre-stored priority of the SCC by using the processor if necessary. In another alternative manner, the base station further includes a network interface 4304, the priority of the PCC and the priority of the SCC are stored in another network device, and the base station obtains the priority of the PCC of the CA UE and the priority of the SCC of the CA UE by using the network interface if necessary.

When the priority of the SCC is higher than the priority of the PCC, an RRC reconfiguration message is sent to the CA UE by using the transceiver unit. The RRC reconfiguration message is used by the CA UE to use the SCC as a new PCC.

Optionally, the priority is determined according to a bandwidth and/or a frequency band of a carrier. Optionally, indication information that indicates a priority of each SCC is included in the RRC reconfiguration message that includes at least two SCCs.

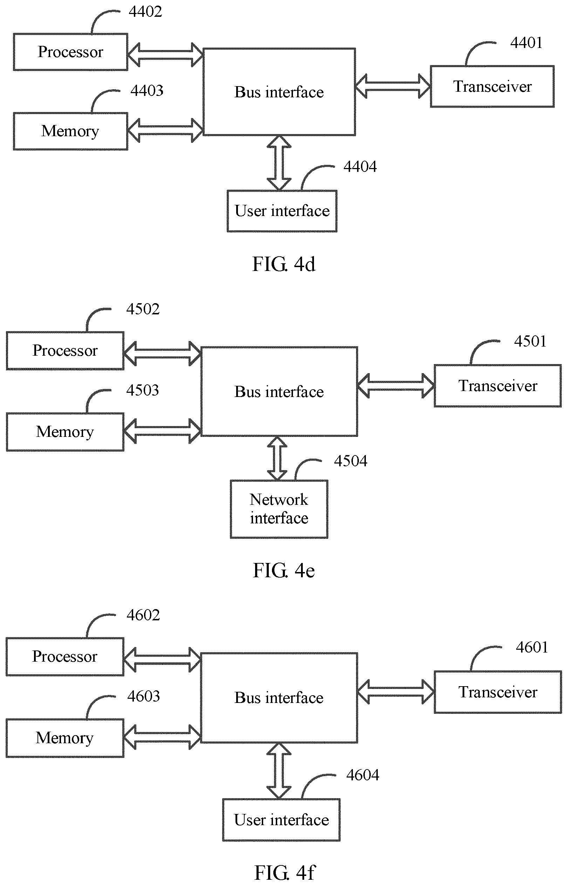

FIG. 4d is a schematic structural diagram of carrier selection CA UE in a carrier aggregation technology according to an embodiment of the present invention.

Based on a same idea, as shown in FIG. 4d, this embodiment of the present invention provides carrier selection CA UE in a carrier aggregation technology. The carrier selection CA UE includes a transceiver 4401, a processor 4402, a memory 4403, and a user interface 4404.

The processor is configured to read a program in the memory to perform the following procedure:
receiving an RRC reconfiguration message sent by a base station, where the RRC reconfiguration message is sent by the base station when the base station determines that a priority of an SCC is higher than a priority of a PCC; and
using the SCC as a new PCC.

FIG. 4e is a schematic structural diagram of a carrier selection base station in a carrier aggregation technology according to an embodiment of the present invention.

Based on a same idea, as shown in FIG. 4e, this embodiment of the present invention provides a carrier selection base station in a carrier aggregation technology. The carrier selection base station includes a transceiver 4501, a processor 4502, and a memory 4503.

The processor is configured to read a program in the memory to perform the method shown in FIG. 2b.

In this solution, when the processor performs the method shown in FIG. 2b, the processor 4502 is configured to obtain a priority of a first carrier when CA UE establishes an RRC connection to the base station on the first carrier. This step specifically includes multiple manners. In one manner, the priority of the first carrier is pre-stored in the base station, and the base station reads the pre-stored priority of the first carrier by using the processor if necessary. In another alternative manner, the base station further includes a network interface 4504, the priority of the first carrier is stored in another network device, and the base station obtains the priority of the first carrier of the CA UE by using the network interface if necessary.

FIG. 4f is a schematic structural diagram of carrier selection CA UE in a carrier aggregation technology according to an embodiment of the present invention.

Based on a same idea, as shown in FIG. 4f, this embodiment of the present invention provides carrier selection CA UE in a carrier aggregation technology. The carrier selection CA UE includes a transceiver 4601, a processor 4602, a memory 4603, and a user interface 4604.

The processor is configured to read a program in the memory to perform the method shown in FIG. 2b.

Persons skilled in the art should understand that the embodiments of the present invention may be provided as a method, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate a device for implementing a specific function in one or more processes in the flowcharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction device. The instruction device implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some embodiments of the present invention have been described, persons skilled in the art can make changes and modifications to these embodiments once they learn the basic inventive concept. Therefore, the following claims are intended to be construed as to cover the embodiments and all changes and modifications falling within the scope of the present invention.

Apparently, persons skilled in the art can make various modifications and variations to the present invention without departing from the scope of the present invention. The present invention is intended to cover these modifications and variations provided that they fall within the scope of protection defined by the following claims.

## Claims

1. A carrier selection method in a carrier aggregation technology, comprising:
obtaining (101), by a base station, radio channel information reported by carrier aggregation, CA, user equipment, UE, wherein the radio channel information comprises radio channel information of a primary component carrier, PCC, and radio channel information of a secondary component carrier, SCC, wherein the radio channel information comprises a channel quality indicator, CQI; and
when the radio channel information of the SCC is greater than the radio channel information of the PCC, wherein the radio channel information of the SCC is greater than the radio channel information of the PCC is specifically: in a second time period, a value obtained after the radio channel information of the PCC is subtracted from the radio channel information of the SCC is greater than a threshold, sending (102), by the base station, a radio resource control, RRC, reconfiguration message to the CA UE, wherein the RRC reconfiguration message is used by the CA UE to use the SCC as a new PCC.

2. The method according to claim 1, wherein when the radio channel information comprises radio channel information of multiple SCCs, and in the second time period, the values obtained after the radio channel information of the PCC is subtracted from the radio channel information of the multiple SCCs are greater than a threshold, and the RRC reconfiguration message comprises information about the multiple SCCs, after the sending (102), the method further comprises:
the RRC reconfiguration message is specifically used by the CA UE to measure a reference signal received power, RSRP, wherein the reference signal received power comprises reference signal received power of the multiple SCCs; and
the CA UE uses an SCC that has largest radio channel information in all SCCs that meet a measurement threshold as a new PCC.

3. The method according to any one of claims 1 to 2, wherein the radio channel information further comprises any one or a combination of the following:
reference signal received power, RSRP, or reference signal received quality, RSRQ.

4. The method according to any one of claims 1 to 3, the RRC reconfiguration message is further used by the CA UE to use the PCC as a new SCC.

5. A base station in a carrier aggregation technology, comprising:
a transceiver unit (3101), configured to obtain radio channel information reported by carrier aggregation, CA, user equipment, UE, wherein the radio channel information comprises radio channel information of a primary component carrier, PCC, and radio channel information of a secondary component carrier, SCC, wherein the radio channel information comprises a channel quality indicator, CQI; and
a processing unit (3102), configured to: when the radio channel information of the SCC is greater than the radio channel information of the PCC, wherein the radio channel information of the SCC is greater than the radio channel information of the PCC is specifically: in a second time period, a value obtained after the radio channel information of the PCC is subtracted from the radio channel information of the SCC is greater than a threshold, send a radio resource control, RRC, reconfiguration message to the CA UE by using the transceiver unit, wherein the RRC reconfiguration message is used by the CA UE to use the SCC as a new PCC.

6. The base station according to claim 5, wherein when the radio channel information comprises radio channel information of multiple SCCs, and in the second time period, the values obtained after the radio channel information of the PCC is subtracted from the radio channel information of the multiple SCCs are greater than a threshold, and the RRC reconfiguration message comprises information about the multiple SCCs, after the sending, the RRC reconfiguration message is specifically used by the CA UE to measure a reference
signal received power of the multiple SCCs; and
an SCC that has largest radio channel information in all SCCs that meet a measurement threshold is used by the CA UE as a new PCC.

7. The base station according to any one of claims 5 to 6, wherein the radio channel information further comprises any one or a combination of the following:
reference signal received power, RSRP, or reference signal received quality, RSRQ.

8. The base station according to any one of claims 5 to 7, wherein the RRC reconfiguration message is further used by the CA UE to use the PCC as a new SCC.

9. A computer program product comprising a non-transitory computer-readable medium storing computer executable instructions that when executed by a processor instruct the processor to:
obtain (101) radio channel information reported by carrier aggregation, CA, user equipment, UE, wherein the radio channel information comprises radio channel information of a primary component carrier, PCC, and radio channel information of a secondary component carrier, SCC, wherein the radio channel information comprises a channel quality indicator, CQI;
when the radio channel information of the SCC is greater than the radio channel information of the PCC, wherein the radio channel information of the SCC is greater than the radio channel information of the PCC is: in a second time period, a value obtained after the radio channel information of the PCC is subtracted from the radio channel information of the SCC is greater than a threshold, send (102) a radio resource control, RRC, reconfiguration message to the CA UE, wherein the RRC reconfiguration message is used by the CA UE to use the SCC as a new PCC.

10. The computer program product according to claim 9, wherein when the radio channel information comprises radio channel information of multiple SCCs, and in the second time period, the values obtained after the radio channel information of the PCC is subtracted from the radio channel information of the multiple SCCs are greater than a threshold, and the RRC reconfiguration message comprises information about the multiple SCCs, after the sending (102),
the RRC reconfiguration message is specifically used by the CA UE to measure a reference signal received power, RSRP, wherein the reference signal received power comprises reference signal received power of the multiple SCCs; and
an SCC that has largest radio channel information in all SCCs that meet a measurement threshold is used by the CA UE as a new PCC.

11. The computer program product according to any one of claims 9 to 10, wherein the radio channel information further comprises any one or a combination of the following:
reference signal received power, RSRP, or reference signal received quality, RSRQ.

12. The computer program product according to any one of claims 9 to 11, wherein the RRC reconfiguration message is further used by the CA UE to use the PCC as a new SCC.

## Patentansprüche

1. Trägerauswahlverfahren in einer Trägeraggregationstechnik, umfassend:
Erhalten (101) von durch Trägeraggregations-, CA-, -Benutzer-Equipment, UE, gemeldeter Funkkanalinformation durch eine Basisstation, wobei die Funkkanalinformation Funkkanalinformation eines primären Komponententrägers, PCC, und Funkkanalinformation eines sekundären Komponententrägers, SCC, umfasst, wobei die Funkkanalinformation einen Indikator der Kanalqualität, CQI, umfasst; und
wenn die Funkkanalinformation des SCC größer ist als die Funkkanalinformation des PCC, wobei die Funkkanalinformation des SCC größer ist als die Funkkanalinformation des PCC im Einzelnen ist: in einem zweiten Zeitraum, wobei ein nach der Subtraktion der Funkkanalinformation des PCC von der Funkkanalinformation des SCC erhaltener Wert größer ist als ein Schwellenwert: Senden (102) einer "Radio Resource Control" RRC-Neukonfigurationsnachricht durch die Basisstation zum CA UE, wobei die RRC-Neukonfigurationsnachricht durch das CA UE eingesetzt wird, um den SCC als einen neuen PCC zu verwenden.

2. Verfahren nach Anspruch 1, wobei das Verfahren, wenn die Funkkanalinformation Funkkanalinformation mehrerer SCCs umfasst und in dem zweiten Zeitraum die nach der Subtraktion der Funkkanalinformation des PCC von der Funkkanalinformation der mehreren SCCs erhaltenen Werte größer sind als ein Schwellenwert und die RRC-Neukonfigurationsnachricht Information zu den mehreren SCCs umfasst, nach dem Senden (102) ferner umfasst:
Die RRC-Neukonfigurationsnachricht wird im Einzelnen durch das CA UE eingesetzt, um eine Referenzsignal-Empfangsleistung, RSRP, zu messen, wobei die Referenzsignal-Empfangsleistung Referenzsignal-Empfangsleistung der mehreren SCCs umfasst; und
das CA UE einen SCC, der eine größte Funkkanalinformation in allen SCCs aufweist, die einen Messschwellenwert einhalten, als einen neuen PCC verwendet.

3. Verfahren nach einem der Ansprüche 1 bis 2, wobei die Funkkanalinformation ferner eine beliebige oder eine Kombination der folgenden umfasst:
Referenzsignal-Empfangsleistung, RSRP, oder Referenzsignal-Empfangsqualität, RSRQ.

4. Verfahren nach einem der Ansprüche 1 bis 3, wobei die RRC-Neukonfigurationsnachricht ferner durch das CA UE eingesetzt wird, um den PCC als einen neuen SCC zu verwenden.

5. Basisstation in einer Trägeraggregationstechnik, umfassend:
eine Sendeempfängereinheit (3101), ausgelegt zum Erhalten von durch Trägeraggregations-, CA-, -Benutzer-Equipment, UE, gemeldeter Funkkanalinformation, wobei die Funkkanalinformation Funkkanalinformation eines primären Komponententrägers, PCC, und Funkkanalinformation eines sekundären Komponententrägers, SCC, umfasst, wobei die Funkkanalinformation einen Indikator der Kanalqualität, CQI, umfasst; und
eine Verarbeitungseinheit (3102), ausgelegt zum Senden einer "Radio Resource Control" RRC-Neukonfigurationsnachricht zum CA UE unter Verwendung der Sendeempfängereinheit in einem zweiten Zeitraum, wenn die Funkkanalinformation des SCC größer ist als die Funkkanalinformation des PCC, wobei die Funkkanalinformation des SCC größer ist als die Funkkanalinformation des PCC im Einzelnen ist, wobei ein nach der Subtraktion der Funkkanalinformation des PCC von der Funkkanalinformation des SCC erhaltener Wert größer ist als ein Schwellenwert, wobei die RRC-Neukonfigurationsnachricht durch das CA UE eingesetzt wird, um den SCC als einen neuen PCC zu verwenden.

6. Basisstation nach Anspruch 5, wobei, wenn die Funkkanalinformation Funkkanalinformation mehrerer SCCs umfasst und in dem zweiten Zeitraum die nach der Subtraktion der Funkkanalinformation des PCC von der Funkkanalinformation der mehreren SCCs erhaltenen Werte größer sind als ein Schwellenwert und die RRC-Neukonfigurationsnachricht Information zu den mehreren SCCs umfasst, die RRC-Neukonfigurationsnachricht nach dem Senden im Einzelnen durch das CA UE eingesetzt wird, um eine Referenzsignal-Empfangsleistung der mehreren SCCs zu messen, und
ein SCC, der eine größte Funkkanalinformation in allen SCCs aufweist, die einen Messschwellenwert einhalten, durch das CA UE als ein neuer PCC verwendet wird.

7. Basisstation nach einem der Ansprüche 5 bis 6, wobei die Funkkanalinformation ferner eine beliebige oder eine Kombination der folgenden umfasst:
Referenzsignal-Empfangsleistung, RSRP, oder Referenzsignal-Empfangsqualität, RSRQ.

8. Basisstation nach einem der Ansprüche 5 bis 7, wobei die RRC-Neukonfigurationsnachricht ferner durch das CA UE eingesetzt wird, um den PCC als einen neuen SCC zu verwenden.

9. Rechnerprogrammprodukt, umfassend ein nicht vorübergehendes rechnerlesbares Medium, rechnerausführbare Anweisungen speichernd, die bei Ausführung durch einen Prozessor den Prozessor anweisen zum
Erhalten (101) von durch Trägeraggregations-, CA-, -Benutzer-Equipment, UE, gemeldeter Funkkanalinformation durch eine Basisstation, wobei die Funkkanalinformation Funkkanalinformation eines primären Komponententrägers, PCC, und Funkkanalinformation eines sekundären Komponententrägers, SCC, umfasst, wobei die Funkkanalinformation einen Indikator der Kanalqualität, CQI, umfasst;
wenn die Funkkanalinformation des SCC größer ist als die Funkkanalinformation des PCC, wobei die Funkkanalinformation des SCC größer ist als die Funkkanalinformation des PCC, ist: in einem zweiten Zeitraum, wobei ein nach der Subtraktion der Funkkanalinformation des PCC von der Funkkanalinformation des SCC erhaltener Wert größer ist als ein Schwellenwert: Senden (102) einer "Radio Resource Control" RRC-Neukonfigurationsnachricht zum CA UE, wobei die RRC-Neukonfigurationsnachricht durch das CA UE eingesetzt wird, um den SCC als einen neuen PCC zu verwenden.

10. Rechnerprogrammprodukt nach Anspruch 9, wobei, wenn die Funkkanalinformation Funkkanalinformation mehrerer SCCs umfasst und in dem zweiten Zeitraum die nach der Subtraktion der Funkkanalinformation des PCC von der Funkkanalinformation der mehreren SCCs erhaltenen Werte größer sind als ein Schwellenwert und die RRC-Neukonfigurationsnachricht Information zu den mehreren SCCs umfasst, die RRC-Neukonfigurationsnachricht nach dem Senden (102) im Einzelnen durch das CA UE eingesetzt wird, um eine Referenzsignal-Empfangsleistung, RSRP, zu messen, wobei die Referenzsignal-Empfangsleistung Referenzsignal-Empfangsleistung der mehreren SCCs umfasst; und
ein SCC, der eine größte Funkkanalinformation in allen SCCs aufweist, die einen Messschwellenwert einhalten, durch das CA UE als ein neuer PCC verwendet wird.

11. Rechnerprogrammprodukt nach einem der Ansprüche 9 bis 10, wobei die Funkkanalinformation ferner eine beliebige oder eine Kombination der folgenden umfasst:
Referenzsignal-Empfangsleistung, RSRP, oder Referenzsignal-Empfangsqualität, RSRQ.

12. Rechnerprogrammprodukt nach einem der Ansprüche 9 bis 11, wobei die RRC-Neukonfigurationsnachricht ferner durch das CA UE eingesetzt wird, um den PCC als einen neuen SCC zu verwenden.

## Revendications

1. Procédé de sélection de porteuse dans une technologie d'agrégation de porteuses, comprenant :
l'obtention (101), par une station de base, d'informations de canal radio rapportées par un équipement utilisateur, UE, à agrégation de porteuses, CA, dans lequel les informations de canal radio comprennent des informations de canal radio d'une porteuse composante primaire, PCC, et des informations de canal radio d'une porteuse composante secondaire, SCC, dans lequel les informations de canal radio comprennent un indicateur de qualité de canal, CQI ; et
lorsque les informations de canal radio de la SCC sont supérieures aux informations de canal radio de la PCC, dans lequel les informations de canal radio de la SCC sont supérieures aux informations de canal radio de la PCC est spécifiquement : dans une seconde période, une valeur obtenue après que les informations de canal radio de la PCC sont soustraites des informations de canal radio de la SCC est supérieure à un seuil, l'envoi (102), par la station de base, d'un message de reconfiguration de contrôle de ressources radio, RRC, à l'UE à CA, dans lequel le message de reconfiguration de RRC est utilisé par l'UE à CA pour utiliser la SCC en tant que nouvelle PCC.

2. Procédé selon la revendication 1, dans lequel, lorsque les informations de canal radio comprennent des informations de canal radio de multiples SCCs, et, dans la seconde période, les valeurs obtenues après que les informations de canal radio de la PCC sont soustraites des informations de canal radio des multiples SCCs sont supérieures à un seuil, et le message de reconfiguration de RRC comprend des informations concernant les multiples SCCs, après l'envoi (102), le procédé comprend en outre :
le message de reconfiguration de RRC est spécifiquement utilisé par l'UE à CA pour mesurer une puissance reçue de signal de référence, RSRP, dans lequel la puissance reçue de signal de référence comprend une puissance reçue de signal de référence des multiples SCCs ; et
l'UE à CA utilise une SCC, qui a des informations de canal radio les plus grandes dans toutes les SCCs qui satisfont à un seuil de mesure, en tant que nouvelle PCC.

3. Procédé selon l'une quelconque des revendications 1 à 2, dans lequel les informations de canal radio comprennent en outre une quelconque ou une association de ce qui suit : puissance reçue de signal de référence, RSRP, ou qualité reçue de signal de référence, RSRQ.

4. Procédé selon l'une quelconque des revendications 1 à 3, le message de reconfiguration de RRC étant en outre utilisé par l'UE à CA pour utiliser la PCC en tant que nouvelle SCC.

5. Station de base dans une technologie d'agrégation de porteuses, comprenant :
une unité de transmission-réception (3101), configurée pour obtenir des informations de canal radio rapportées par un équipement utilisateur, UE, à agrégation de porteuses, CA, dans laquelle les informations de canal radio comprennent des informations de canal radio d'une porteuse composante primaire, PCC, et des informations de canal radio d'une porteuse composante secondaire, SCC, dans laquelle les informations de canal radio comprennent un indicateur de qualité de canal, CQI ; et
une unité de traitement (3102), configurée pour : lorsque les informations de canal radio de la SCC sont supérieures aux informations de canal radio de la PCC, dans laquelle les informations de canal radio de la SCC sont supérieures aux informations de canal radio de la PCC est spécifiquement : dans une seconde période, une valeur obtenue après que les informations de canal radio de la PCC sont soustraites des informations de canal radio de la SCC est supérieure à un seuil, envoyer un message de reconfiguration de contrôle de ressources radio, RRC, à l'UE à CA en utilisant l'unité de transmission-réception, dans laquelle le message de reconfiguration de RRC est utilisé par l'UE à CA pour utiliser la SCC en tant que nouvelle PCC.

6. Station de base selon la revendication 5, dans laquelle, lorsque les informations de canal radio comprennent des informations de canal radio de multiples SCCs, et, dans la seconde période, les valeurs obtenues après que les informations de canal radio de la PCC sont soustraites des informations de canal radio des multiples SCCs sont supérieures à un seuil, et le message de reconfiguration de RRC comprend des informations concernant les multiples SCCs, après l'action d'envoyer, le message de reconfiguration de RRC est spécifiquement utilisé par l'UE à CA pour mesurer une puissance reçue de signal de référence des multiples SCCs ; et
une SCC, qui a des informations de canal radio les plus grandes dans toutes les SCCs qui satisfont à un seuil de mesure, est utilisée par l'UE à CA en tant que nouvelle PCC.

7. Station de base selon l'une quelconque des revendications 5 à 6, dans laquelle les informations de canal radio comprennent en outre une quelconque ou une association de ce qui suit :
puissance reçue de signal de référence, RSRP, ou qualité reçue de signal de référence, RSRQ.

8. Station de base selon l'une quelconque des revendications 5 à 7, dans laquelle le message de reconfiguration de RRC est en outre utilisé par l'UE à CA pour utiliser la PCC en tant que nouvelle SCC.

9. Produit programme d'ordinateur comprenant un support non transitoire lisible par ordinateur stockant des instructions exécutables par ordinateur qui, lorsqu'elles sont exécutées par un processeur, donne l'instruction au processeur de :
obtenir (101) des informations de canal radio rapportées par un équipement utilisateur, UE, à agrégation de porteuses, CA, dans laquelle les informations de canal radio comprennent des informations de canal radio d'une porteuse composante primaire, PCC, et des informations de canal radio d'une porteuse composante secondaire, SCC, dans laquelle les informations de canal radio comprennent un indicateur de qualité de canal, CQI ;
lorsque les informations de canal radio de la SCC sont supérieures aux informations de canal radio de la PCC, dans laquelle les informations de canal radio de la SCC sont supérieures aux informations de canal radio de la PCC est : dans une seconde période, une valeur obtenue après que les informations de canal radio de la PCC sont soustraites des informations de canal radio de la SCC est supérieure à un seuil, envoyer (102) un message de reconfiguration de contrôle de ressources radio, RRC, à l'UE à CA, dans laquelle le message de reconfiguration de RRC est utilisé par l'UE à CA pour utiliser la SCC en tant que nouvelle PCC.

10. Produit programme d'ordinateur selon la revendication 9, dans lequel, lorsque les informations de canal radio comprennent des informations de canal radio de multiples SCCs, et, dans la seconde période, les valeurs obtenues après que les informations de canal radio de la PCC sont soustraites des informations de canal radio des multiples SCCs sont supérieures à un seuil, et le message de reconfiguration de RRC comprend des informations concernant les multiples SCCs, après l'action d'envoyer (102), le message de reconfiguration de RRC est spécifiquement utilisé par l'UE à CA pour mesurer une puissance reçue de signal de référence, RSRP, dans lequel la puissance reçue de signal de référence comprend une puissance reçue de signal de référence des multiples SCCs ; et
une SCC, qui a des informations de canal radio les plus grandes dans toutes les SCCs qui satisfont à un seuil de mesure, est utilisée par l'UE à CA en tant que nouvelle PCC.

11. Produit programme d'ordinateur selon l'une quelconque des revendications 9 et 10, dans lequel les informations de canal radio comprennent en outre une quelconque ou une association de ce qui suit :
puissance reçue de signal de référence, RSRP, ou qualité reçue de signal de référence, RSRQ.

12. Produit programme d'ordinateur selon l'une quelconque des revendications 9 à 11, dans lequel le message de reconfiguration de RRC est en outre utilisé par l'UE à CA pour utiliser la PCC en tant que nouvelle SCC.
